# EUROPÄISCHE PATENTANMELDUNG

(11) **EP 2 105 188 A1**
(43) Veröffentlichungstag der Anmeldung: **30.09.2009**
(21) Anmeldenummer: 08005847.2
(22) Anmeldetag: 27.03.2008
(51) Int. Cl.: B01D 53/14, B01D 53/62, C01B 31/20

(54) **Verfahren und Vorrichtung zum Abtrennen von Kohlendioxid aus einem Abgas einer fossilbefeuerten Kraftwerksanlage**

(71) Anmelder: SIEMENS AKTIENGESELLSCHAFT, 80333 München (DE)
(72) Erfinder: Rost, Mike, 91058 Erlangen (DE); Schneider, Rüdiger, Dr., 65817 Eppstein (DE); Schramm, Henning, Dr., 60598 Frankfurt (DE)

(57) **Zusammenfassung**

Die Erfindung betrifft ein Verfahren zum Abtrennen von Kohlendioxid aus einem Abgas einer fossilbefeuerten Kraftwerksanlage, bei dem in einem Verbrennungsprozess (1) ein fossiler Brennstoff verbrannt wird, wobei ein kohlendioxidhaltiges Abgas (2) erzeugt wird, bei dem in einem Absorptionsprozess (3) kohlendioxidhaltiges Abgas (2) mit einem Absorptionsmedium in Kontakt gebracht wird, wobei Kohlendioxid von dem Absorptionsmedium aufgenommen wird, wobei ein beladenes Absorptionsmedium (4) und ein gereinigtes Abgas (5) gebildet wird, das von Kohlendioxid befreit ist, und bei dem in einem Desorptionsprozess (6) von dem beladenen Absorptionsmedium (4) gasförmiges Kohlendioxid (7) abgegeben wird, wobei regeneriertes Absorptionsmedium (8) gebildet wird, wobei in dem Desorptionsprozess (6) das beladene Absorptionsmedium (4) zunächst in mindestens einem Vorregenerierungsschritt (9) teilregeneriert wird, und in einem dem Vorregenerierungsschritt (9) nachfolgenden Endregenerierungsschritt (10) das beladene Absorptionsmedium (4) regeneriert wird.

## Beschreibung

Die Erfindung betrifft ein Verfahren zum Betreiben einer fossilbefeuerten Kraftwerksanlage und insbesondere ein Verfahren zum Abtrennen von Kohlendioxid aus einem Abgas einer fossilbefeuerten Kraftwerksanlage. Die Erfindung betrifft außerdem eine fossilbefeuerte Kraftwerksanlage mit einer Abscheidevorrichtung zum Abtrennen von Kohlendioxid aus einem Abgas.

Bei so lchen fossilbefeuerten Kraftwerksanlagen zur Erzeugung elektrischer Energie entsteht durch die Verbrennung eines fossilen Brennstoffes ein kohlendioxidhaltiges Abgas. Dieses Produkt wird in der Regel in die Atmosphäre entlassen. Das sich in der Atmosphäre ansammelnde Kohlendioxid behindert die Wärmeabstrahlung unserer Erde und führt dabei durch den so genannten Treibhauseffekt zu einer Erhöhung der Erdoberflächentemperatur. Um eine Reduzierung der Kohlendioxid-Emission bei fossilbefeuerten Kraftwerksanlagen zu erreichen, kann Kohlendioxid aus dem Abgas abgetrennt werden.

Zur Abtrennung von Kohlendioxid aus einem Gasgemisch sind allgemein verschiedene Methoden bekannt. Insbesondere zum Abtrennen von Kohlendioxid aus einem Abgas nach einem Verbrennungsprozess (Post-combustion CO₂ separation) ist die Methode der ,Absorption-Desorption' oder der ,Tieftemperaturabscheidung (Cryogenic)' bekannt.

In großtechnischem Maßstab wird das beschriebene Abtrennen von Kohlendioxid mit dem Absorptions-Desorptionsverfahren mit einem Waschmittel durchgeführt. In einem klassischen Absorptions-Desorptions-Prozess wird das Abgas in einer Absorptionskolonne mit einem selektiven Lösungsmittel als Waschmittel in Kontakt gebracht. Dabei erfolgt die Aufnahme von Kohlendioxid durch einen chemischen oder physikalischen Prozess. Das gereinigte Abgas wird für eine weitere Verarbeitung oder Austragung aus der Absorptionskolonne ausgelassen. Das mit Kohlendioxid beladene Lösungsmittel wird zur Abtrennung des Kohlendioxids und Regenerierung des Lösungsmittels in eine Desorptionskolonne geleitet. Die Abtrennung in der Desorptionskolonne kann thermisch erfolgen. Dabei wird aus dem beladenen Lösungsmittel ein Gas- Dampfgemisch aus gasförmigem Kohlendioxid und verdampften Lösungsmittel ausgetrieben. Das verdampfte Lösungsmittel wird anschließend von dem gasförmigen Kohlendioxid separiert. Das Kohlendioxid kann nun in mehreren Stufen verdichtet und gekühlt werden. In flüssigem oder gefrorenem Zustand kann das Kohlendioxid dann einer Lagerung oder Verwertung zugeführt werden. Das regenerierte Lösungsmittel wird erneut zur Absorberkolonne geleitet, wo es wieder Kohlendioxid aus dem kohlendioxidhaltigen Abgas aufnehmen kann.

Das Hauptproblem bei den existierenden Verfahren zum Abtrennen von Kohlendioxid aus einem Gasgemisch ist insbesondere der sehr hohe Energieaufwand, der in Form von Heizenergie für die Desorption benötigt wird. Um diesem Problem entgegen zu wirken, sind aus dem Stand der Technik eine Reihe von Vorschlägen bekannt.

So beschreibt die DE 299 24 190 U1 die Zusammenführung von Lösungsmitteln unterschiedlicher Regenerierungsgrade und Rückführung in den Absorber. Dazu weist die vorgeschlagene Wiederaufbereitungsanlage zur Wiedergewinnung einer gasförmigen Komponente aus einem Prozessgas einen Absorber auf, der ein dünnes Lösungsmittel und ein halbdünnes Lösungsmittel benutzt, welche die gasförmige Komponente aus dem Prozessgas absorbiert, wodurch ein angereichertes Lösungsmittel, ein halb angereichertes Lösungsmittel und dünnes Prozessgas erzeugt wird. Ein Regenerator ist an den Absorber gekoppelt, worin der Regenerator die gasförmige Komponente aus dem angereicherten Lösungsmittel entfernt, wodurch das dünne Lösungsmittel und das halbdünne Lösungsmittel wiedergewonnen werden. Ein Element für Kontrolle des Lösungsmittelflusses ist an den Absorber gekoppelt und kombiniert mindestens einen Teil des halb angereicherten Lösungsmittels mit zumindest einem Teil des halbdünnen Lösungsmittels, um ein gemischtes Lösungsmittel zu bilden. Ein Kühler ist an den Absorber gekoppelt, der das gemischte Lösungsmittel kühlt. Das gekühlte Lösungsmittel wird anschließend durch ein verbindendes Element in den Absorber geführt. Durch diesen Prozess soll Energie zum Regenerieren des Lösungsmittels eingespart werden können. Jedoch ist bei Integration der vorgeschlagenen Wiederaufbereitungsanlage in eine fossilbefeuerte Kraftwerksanlage, mit einer signifikanten Verschlechterung der Effizienz der Kraftwerksanlage zu rechnen, da die Wärmeenergie zum Betreiben des Regenerators nach wie vor aus dem Heißdampf des Kraftwerksprozesses entnommen werden muss.

Genereller Nachteil an Abtrennverfahren für Kohlendioxid aus einem Abgas, die aus dem Stand der Technik bekannt sind, ist insbesondere der hohe Energieaufwand, was bei Integration des Abtrennverfahrens in eine fossilbefeuerte Kraftwerksanlage zu einer unerwünschten Verschlechterung des Gesamtwirkungsgrades der fossilbefeuerten Kraftwerksanlage führt. Die Wirtschaftlichkeit einer solchen fossilbefeuerten Kraftwerksanlage mit integrierter Kohlendioxidabtrennungsvorrichtung ist daher deutlich geringer.

Eine Aufgabe der Erfindung besteht darin, ein Verfahren zum Abtrennen von Kohlendioxid aus einem Abgas einer fossilbefeuerten Kraftwerksanlage vorzuschlagen, das eine hohe Abscheideeffizienz bei zugleich günstigem Gesamtanlagenwirkungsgrad des Kraftwerksprozesses ermöglicht.

Eine weitere Aufgabe der Erfindung ist es, eine fossilbefeuerte Kraftwerksanlage mit einer Abscheidevorrichtung für Kohlendioxid vorzuschlagen, welche eine hohe Abscheideeffizienz bei zugleich günstigem Gesamtwirkungsgrad der Kraftwerksanlage ermöglicht.

Die auf ein Verfahren gerichtete Aufgabe ist erfindungsgemäß gelöst mit einem Verfahren zum Abtrennen von Kohlendioxid aus einem Abgas einer fossilbefeuerten Kraftwerksanlage, bei dem in einem Verbrennungsprozess ein fossiler Brennstoff verbrannt wird, wobei ein kohlendioxidhaltiges Abgas erzeugt wird, bei dem in einem Absorptionsprozess kohlendioxidhaltiges Abgas mit einem Absorptionsmedium in Kontakt gebracht wird, wobei Kohlendioxid von dem Absorptionsmedium aufgenommen wird, wobei ein beladenes Absorptionsmedium und ein gereinigtes Abgas gebildet wird, das von Kohlendioxid weitgehend befreit ist, bei dem in einem Desorptionsprozess von dem beladenen Absorptionsmedium gasförmiges Kohlendioxid abgegeben wird, wobei regeneriertes Absorptionsmedium gebildet wird, wobei in dem Desorptionsprozess das beladene Absorptionsmedium zunächst in mindestens einem Vorregenerierungsschritt teilregeneriert wird, und in einem dem Vorregenerierungsschritt nachfolgenden Endregenerierungsschritt das beladene Absorptionsmedium regeneriert wird.

Die Erfindung geht dabei von der Überlegung aus, dass in einer Kraftwerksanlage in einem Verbrennungsprozess durch die Verbrennung eines fossilen Brennstoffs ein kohlendioxidhaltiges Abgas erzeugt wird, wobei in einem dem Verbrennungsprozess nachgeschalteten Absorptionsprozess das kohlendioxidhaltige Abgas mit einem Absorptionsmedium gereinigt wird, wobei das dadurch entstehende beladene Absorptionsmedium in einem dem Absorptionsprozess nachgeschalteten Desorptionsprozess in wenigstens zwei Regenerierungsschritten regeneriert wird.

In dem ersten Regenerierungsschritt, dem Vorregenerierungsschritt, erfolgt zunächst eine Vorregenerierung des beladenen Absorptionsmediums in einem ersten Desorptionsprozess. Dabei wird von dem beladenen Absorptionsmedium gasförmiges Kohlendioxid abgegeben, wobei ein teilregeneriertes Absorptionsmedium gebildet wird. Das teilregenerierte Absorptionsmedium wird nun dem zweiten Regenerierungsschritt, dem Endregenerierungsschritt zugeführt. In dem Endregenerierungsschritt erfolgt in einem zweiten Desorptionsprozess eine Endregenerierung, wobei von dem teilregenerierten Absorptionsmedium gasförmiges Kohlendioxid abgegeben wird, wobei ein regeneriertes Absorptionsmedium gebildet wird. Das regenerierte Absorptionsmedium kann nun wieder dem Absorptionsprozess zugeführt werden. Durch die Rückführung des Absorptionsmediums in den Absorptionsprozess wird das Absorptionsmedium zwischen dem Absorptionsprozess und dem Desorptionsprozess in einem Kreislauf geführt.

Durch die von der Erfindung vorgeschlagene mehrstufige Regenerierung ist es möglich, den Vorregenerierungsschritt mit Energie zu betreiben, die im Kraftwerk vorzugsweise ohnehin vorhanden ist oder abfällt. Dadurch ist bereits eine Teilregenerierung des beladenen Absorptionsmediums gegeben, was den notwendigen Bedarf an höherwertigerer Energie in dem Endregenerierungsschritt reduziert. Dies ermöglicht einen deutlich effizienteren Betrieb einer Kohlendioxid-Abscheidevorrichtung, insbesondere bei einer Kraftwerksanlage, die gegenüber einer herkömmlichen Betriebsweise in der Energieausnutzung verbessert ist.

Die jeweiligen Prozesse aus Vorregenerierung und Endregenerierung sind prozesstechnisch von einander getrennt, aber in einem Gehäuse angeordnet. Eine Anordnung, bei der die Prozesse aus Vorregenerierung und Endregenerierung auf mehrere Gehäuse verteilt werden, kann Prozessbedingt ebenso von Vorteil sein.

Als fossiler Brennstoff sind dabei Gase wie z.B. Erdgas (Methan, Ethan, Propan, Butan, Ethen), Feststoffe wie z.B. Braun- oder Steinkohle und Flüssigkeiten wie z.B. Erdöl denkbar.

Die Energie zum Betreiben der Kohlendioxid-Abscheidevorrichtung einer fossilbefeuerten Kraftwerksanlage wird in der Regel durch Dampf bereit gestellt, der z.B. aus dem Kessel einer Dampfkraftwerksanlage oder dem Abhitzedampferzeuger einer Gas- und Dampfturbinenkraftwerksanlage entnommen wird. Da durch den deutlich effizienteren Betrieb der Kohlendioxid-Abscheidevorrichtung eine Einsparung dieses Dampfes erreicht wird, erhöht sich der Wirkungsgrad des Dampfturbinen- bzw. Dampfkraftwerksprozesses.

Das Verfahren zum Abtrennen von Kohlendioxid aus einem Abgas einer fossilbefeuerten Kraftwerksanlage durch einen mehrstufigen Desorptionsprozess ermöglicht somit einen wesentlichen effizienteren Betrieb durch erhöhten Gesamtwirkungsgrad der Kraftwerksanlage. Dies wird dadurch erreicht, dass Energie auf unterschiedlichen Temperaturniveaus an mehreren Stufen des Desorptionsprozesses eingebracht wird, und somit höherwertiger Dampf mit dem Preis der Zugabe von niederwertigem Dampf eingespart wird. Die Erfindung ermöglicht zudem die nachträgliche Installation einer Kohlendioxid-Abscheidevorrichtung unter Erfüllung ökonomischer Bedingungen.

In einer vorteilhaften Ausgestaltung des Kohlendioxid-Abtrennungsverfahrens wird in dem Vorregenerierungsschritt das beladene Absorptionsmedium in mehreren Vorregenerierungsschritten teilregeneriert. Dies ist von Vorteil, wenn dadurch Energie genutzt werden kann, die ohnehin auf unterschiedlichen Temperaturen im Kraftwerk bereitgestellt ist oder abfällt.

Vorteilhafterweise wird bei dem Kohlendioxid-Abtrennungsverfahren in dem Desorptionsprozess von dem beladenen Absorptionsmedium gasförmiges Kohlendioxid thermisch ausgetrieben. Dies ermöglicht die Nutzung von Wärme, die in dem Gesamtprozess der Kraftwerksanlage anfällt. Vorzugsweise wird thermische Energie durch Dampf bereit gestellt, der z.B. aus dem Kessel einer Dampfkraftwerkesanlage oder dem Abhitzedampferzeuger einer Gas- und Dampfturbinenkraftwerksanlage entnommen wird.

Bei einer besonderen Ausgestaltung des Kohlendioxid-Abtrennungsverfahrens wird der Vorregenerierungsschritt zur Teilregenerierung des beladenen Absorptionsmediums bei einer Vorregenerierungstemperatur durchgeführt, und der Endregenerierungsschritt zur Regenerierung des beladenen Absorptionsmediums bei einer Endregenerierungstemperatur durchgeführt, wobei die Vorregenerierungstemperatur niedriger eingestellt wird als die Endregenerierungstemperatur. Die Temperatur wird dabei jeweils so eingestellt, dass der jeweilige Desorptionsprozess durchführbar ist.

In einer vorteilhaften Weiterbildung des Kohlendioxid-Abtrennungsverfahrens wird in dem Vorregenerierungsschritt die Wärme für die Vorreinigungstemperatur durch Niedertemperaturdampf bereitgestellt, wobei dieser in einem Wärmetauscherprozess mit dem beladenen Absorptionsmedium im Wärmetausch geführt wird. Vorteilhaft wird dabei der Niedertemperaturdampf mit einer Temperatur zwischen 60°C und 120°C verwendet. Der hier vorgeschlagene Niedertemperaturdampf kann Dampf sein, der ohnehin im Kraftwerksprozess abfällt oder an geeigneter Stelle entnommen werden kann. Geeignete Stellen für eine Entnahme bestehen z.B. bei einem Dampfkraftwerksanlagenprozess bei einer Dampfturbine zwischen dem Hochdruckteil und dem Niederdurckteil der Dampfturbine.

In einer weiteren vorteilhaften Weiterbildung des Kohlendioxid-Abtrennungsverfahrens wird in dem Endregenerierungsschritt die Wärme für die Endreinigungstemperatur durch Heißdampf bereitgestellt wird, wobei dieser in einem Wärmetauscherprozess mit dem beladenen Absorptionsmedium im Wärmetausch geführt. Dabei wird der Heißdampf auf eine höhere Temperatur eingestellt, als die Temperatur des Niedertemperaturdampfs. Von Vorteil ist dabei die Verwendung eines höherwertigeren Heißdampfes mit einer Temperatur von mindestens 120°C. Der Heißdampf kann z.B. aus dem Kessel eines Dampfkraftwerksanlagenprozesses oder aus dem Dampfkreislauf eines Gas- und Dampfturbinenkraftwerksprozesses entnommen werden.

Vorteilhafterweise wird in dem Kohlendioxid-Abtrennungsverfahren außerdem ein Fluid als Absorptionsmedium vorgeschlagen. Gegenüber einem Festkörpermedium bietet ein Fluid in dem erfindungsgemäßen Verfahren erhebliche Vorteile bei der Durchleitung des Mediums in den Prozess. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Ein besonders guter Prozessdurchlauf wird durch eine Lösung aus H2O und Aminderivaten als Lösungsmittel erzielt. Bekannt sind beispielsweise Lösungen unter den Namen MEA (Mono-Ethanolamin) und MDEA (Methyldiethanolamin).

In einer Vorteilhaften Ausgestaltung des Kohlendioxid-Abtrennungsverfahrens wird in einem Vorwärmprozess Wärme von dem regenerierten Absorptionsmedium entzogen, und an das beladenes Absorptionsmedium abgegeben. Dadurch wird eine Abkühlung des regenerierten Absorptionsmediums erzielt und gleichermaßen eine Vorwärmung des beladenen Absorptionsmediums. Dies erspart zusätzliche Energie für Abkühlung und Erwärmung. Der Vorwärmprozess ist mit einem Wärmetauscherprozess vergleichbar.

In einer vorteilhaften Weiterbildung des Kohlendioxid-Abtrennungsverfahrens wird das aus dem Abgas abgetrennte Kohlendioxid in einem Komprimierungsprozess komprimiert. Das dabei entstehende komprimierte Kohlendioxid wird anschließend gespeichert.

Vorteilhafterweise kommt das beschriebene Kohlendioxid-Abtrennungsverfahren bei einem fossilbefeuerten Dampfkraftwerk oder bei einer kombinierten Gas- und Dampfturbinen-Kraftwerksanlage zur Anwendung. Die Implementierung des beschriebenen Kohlendioxid-Abtrennungsverfahrens in andere fossilbefeuerte Kraftwerksprozesse ist dann ebenso sinnvoll, wenn das Kohlendioxid-Abtrennungsverfahren vorhandene oder abfallende Energie des Kraftwerksprozesses nutzen kann.

Die auf eine fossilbefeuerte Kraftwerksanlage gerichtete Aufgabe der Erfindung wird gelöst durch eine Fossilbefeuerte Kraftwerksanlage mit einer einer Verbrennungsvorrichtung nachgeschalteten und von einem kohlendioxidhaltigen Abgas durchströmbaren Abscheidevorrichtung für Kohlendioxid, wobei die Abscheidevorrichtung eine Absorptionseinheit zur Aufnahme von Kohlendioxid aus dem kohlendioxidhaltigen Abgas und eine Desorptionseinheit zur Abgabe des aufgenommenen Kohlendioxids aufweist, und wobei zur Abgabe des Kohlendioxids die Desorptionseinheit einen Regenerator umfasst, wobei der Regenerator ein Vorregenerierungssystem und ein Endregenerierungssystem aufweist, so dass im Betrieb eine gestufte Abgabe von Kohlendioxid bewirkt ist.

Dabei geht die auf eine fossilbefeuerte Kraftwerksanlage gerichtete Erfindung von der Überlegung aus, dass die Desorptionseinheit einen Regenerator umfasst, der Kohlendioxid gestuft in einem Vorregenerierungssystem und einem Endregenerierungssystem abgibt. Das Vorregenerierungssystem ermöglicht dabei zunächst eine Teilabgabe des Kohlendioxids. In dem Endregenerierungssystem, das dem Vorregenerierungssystem nachgeschaltet ist, erfolgt anschließend die weitgehend vollständige Abgabe von Kohlendioxid. Das von Kohlendioxid gereinigte Abgas, sowie das abgegebene Kohlendioxid kann nun einer weiteren Verwendung zugeführt werden. Der Regenerator entspricht einer Desorptionskolonne. Das Vorregenerierungssystem und das Endregenerierungssystem sind Bestandteile des Regenerators. Ist ein erstes Vorregenerierungssystem vorgesehen, umfasst dieses einen Sumpfverdampfer. Das Endregenerierungssystem umfasst mindestens einen Seitenverdampfer. Durch den Sumpfverdampfer und den Seitenverdampfer ist jeweils Energie in den Regenerator zuführbar.

Die Erfindung sieht einen Regenerator mit wenigstens einem ersten Vorregenerierungssystem vor. Je nach Ausgestaltung der Kraftwerksanlage kann es auch von Vorteil sein, einen zweiten ersten oder mehrere erste Vorregnerierungssysteme vorzusehen. Sind mehrere Vorregenerierungssysteme vorgesehen, umfasst das erste Vorregenerierungssystem einen Sumpfverdampfer und das oder die weiteren Vorregenerierungssysteme Seitenverdampfer. Das Endregenerierungssystem umfasst ebenso einen Seitenverdampfer. Durch eine gestufte Ausgestaltung des Regenerators in eine Stufe für die Vorregenerierung und eine Stufe für die Endregenerierung lassen sich die jeweiligen Stufen zum Betrieb auf die zur Verfügung stehende Energie anpassen. So ist das Vorregenerierungssystem mit Energie betreibbar, welche im Kraftwerk vorhanden ist, oder ohnehin ungenutzt abfällt. Dies ermöglicht bereits eine Teilabgabe von Kohlendioxid und reduziert den Energieaufwand für das Endregenerierungssystem zum abgeben von Kohlendioxid. Dadurch ist ein deutlich effizienterer Betrieb einer Kohlendioxid-Abscheidevorrichtung möglich, insbesondere bei einer Kraftwerksanlage, welche gegenüber einer herkömmlichen Betriebsweise im Energiebedarf deutlich reduziert ist.

Die jeweiligen Regenerierungssysteme aus Vorregenerierung und Endregenerierung laufen dabei räumlich von einander getrennt ab. Die Durchführung dieser gestuften Regenerierung - Vorregenerierung und Endregenerierung - des Abgases in einem einzigen Gehäuse ist möglich.

Die Energie zum Betreiben der Kohlendioxid-Abscheidevorrichtung einer fossilbefeuerten Kraftwerksanlage wird in der Regel durch Heißdampf bereit gestellt, der z.B. aus dem Kessel einer Dampfkraftwerksanlage oder dem Abhitzedampferzeuger einer Gas- und Dampfturbinenkraftwerksanlage entnommen wird. Da durch den deutlich effizienteren Betrieb der Kohlendioxid-Abscheidevorrichtung eine Einsparung des Heißdampfes erreicht wird, erhöht sich der Gesamtwirkungsgrad der fossilbefeuerten Kraftwerksanlage.

Die Erfindung einer fossilbefeuerten Kraftwerksanlage mit einem mehrstufigen Regenerierung ermöglicht somit einen wesentlichen effizienteren Betrieb der Gesamtkraftwerksanlage. Dies ist dadurch möglich, dass Energie auf unterschiedlichen Temperaturniveaus an mehreren Stellen der Desorptionskolonne eingebracht wird. Dadurch ist der Sumpfverdampfer entlastet, und höherwertiger Dampf wird mit dem Preis der Zugabe von niederwertigem Dampf eingespart. Die Erfindung ermöglicht zudem die nachträgliche Installation einer Kohlendioxid-Abscheidevorrichtung unter Erfüllung ökonomischer Bedingungen.

In einer vorteilhaften Weiterbildung der fossilbefeuerten Kraftwerksanlage ist durch den Regenerator Kohlendioxid aus einem beladenen Absorptionsmedium thermisch austreibbar. Dies gestattet die Verwendung der Wärme die in der Kraftwerksanlage vorhanden ist.

In einer weiteren vorteilhaften Ausgestaltung der fossilbefeuerten Kraftwerksanlage ist im Betrieb der Abscheidevorrichtung bei dem Vorregenerierungssystem für eine Teilregenerierung des beladenen Absorptionsmediums eine Vorreinigungstemperatur einstellbar, und bei dem Endregenerierungssystem für eine Regenerierung des beladenen Absorptionsmediums eine Endreinigungstemperatur einstellbar, so dass die Vorreinigungstemperatur niedriger ist als die Endreinigungstemperatur.

Vorteilhaft weist das Vorregenerierungssystem mehrere Vorreinigungseinheiten auf, so dass eine Vorreinigung in mehreren Vorregenerierungsschritten durchführbar ist. Dadurch ist jede Vorreinigungseinheit angepasst an Energie betreibbar, die im Kraftwerk vorhanden ist oder ohnehin ungenutzt abfällt.

In einer besonderen Ausgestaltung der fossilbefeuerten Kraftwerksanlage weist das Vorregenerierungssystem wenigstens eine Heizvorrichtung auf. Die Heizvorrichtung des Vorregenierungssystems kann als Sumpf- oder Seitenverdampfer ausgebildet sein. Ebenso sieht eine besondere Ausgestaltung vor, dass das Endregenerierungssystem eine Heizvorrichtung aufweist. Das Heizvorrichtung des Endregenerierungssystems kann als Seitenverdampfer ausgebildet sein.

Zweckmäßigerweise ist in dem Vorregenerierungssystem der fossilbefeuerten Kraftwerksanlage die Heizvorrichtung als Wärmeübertrager ausgestaltet. Die Primärseite des Wärmeübertragers ist dabei mit einer Niedertemperaturdampfleitung verbunden und die Sekundärseite bildet einen Heizkreislauf. So ist im Betrieb das beladene Absorptionsmedium beheizbar und Kohlendioxid aus dem beladenen Absorptionsmedium thermisch austreibbar. In dem Endregenerierungssystem der fossilbefeuerten Kraftwerksanlage ist zweckmäßigerweise die Heizvorrichtung ebenfalls als Wärmeübertrager ausgestaltet. Die Primärseite des Wärmeübertragers ist mit einer Heißdampfleitung verbunden und die Sekundärseite bildet einen Heizkreislauf. So ist im Betrieb das Absorptionsmedium beheizbar und Kohlendioxid aus dem Absorptionsmedium thermisch austreibbar. Der Wärmeübertrager kann als Wärmetauscher ausgestaltet sein.

In einer besonders vorteilhaften Weiterbildung der fossilbefeuerten Kraftwerksanlage ist der Wärmeeintrag in den Wärmeübertrager einstellbar. Dies ist durch die Regulierung der Parameter Dampfdurchflussmenge und Temperatur gegeben. Diese Parameter können einzeln und getrennt von einander reguliert werden. Ebenso ist eine kombinierte Regulierung zum Einstellen des Wämeeintrags in den Wärmeübertrager denkbar. Die Regulierung kann über Ventile erfolgen.

In einer zweckmäßigen Ausgestaltung der fossilbefeuerten Kraftwerksanlage ist im Betrieb der Kraftwerksanlage durch die Niedertemperaturdampfleitung ein Niedertemperaturdampf bereitgestellt, und durch die Heißdampfleitung ein Heißdampf bereitgestellt. Dabei hat der Niedertemperaturdampf eine geringere Temperatur als der Heißdampf.

In einer bevorzugten Ausgestaltung der fossilbefeuerten Kraftwerksanlage ist die Desorptionseinheit als eine entlang einer vertikalen Achse ausgerichteten Säule ausgestaltet. Die Säule weist dabei im oberen Bereich einen Einlass und im unteren Bereich einen Auslass auf. Im Betrieb ist somit beladenes Absorptionsmedium im oberen Bereich einführbar und im unteren Bereich ein regeneriertes Absorptionsmedium ausleitbar, wodurch eine Durchströmung der Desorptionseinheit mit beladenem Absorptionsmediums bewirkt ist. Wie bei der Desorptionseinheit wird in einer weiteren besonderen Ausgestaltung der fossilbefeuerte Kraftwerksanlage vorgeschlagen, ebenso die Absorptionseinheit als eine entlang einer vertikalen Achse ausgerichteten Säule auszugestalten. Die Säule weist ebenso im oberen Bereich einen Einlass und im unteren Bereich einen Auslass auf. Im Betrieb ist dadurch regeneriertes Absorptionsmedium im oberen Bereich einführbar, und beladenes Absorptionsmedium im unteren Bereich ausleitbar. Durch die Absorptionseinheit ist ebenso ein kohlendioxidhaltiges Abgas leitbar, so dass eine Durchströmung nach dem Gegenstromprinzip von kohlendioxidhaltigem Abgas und Absorptionsmedium bewirkt ist. Die beschriebenen Säulen können auch als Kolonnen ausgestaltet sein.

Bei einer weiteren bevorzugten Ausgestaltung der fossilbefeuerten Kraftwerksanlage ist in der Desorptionseinheit die Heizvorrichtung des Vorregenerierungssystems entlang der vertikalen Achse derart an einer vertikalen Position positioniert ist, so dass eine erforderliche Vorreinigungstemperatur lokal bereitstellbar ist. Dies ist von Vorteil, wenn der Niedertemperaturdampf zum Betrieb der Herzvorrichtung wechselnde Dampfparameter aufweist, z.B. unterschiedliche Temperaturen. Da die Regeneration des Absorptionsmediums in dem Regenerator in jeder vertikalen Position bei unterschiedlichen Temperaturen abläuft, kann die Heizvorrichtung an einer Stelle positioniert werden, an der die Temperatur des Niederdruckdampfes mit der benötigen Temperatur für die Regeneration korrespondiert. Die Einstellung der vertikalen Position, also der Höhe, an der die Heizvorrichtung an dem Vorregenerierungssystem angebracht ist, kann dabei durch Repositionieren der Heizvorrichtung erfolgen. Dabei wird die Heizvorrichtung entnommen und an anderer Stelle montiert. Es ist auch möglich mehrere Heizvorrichtungen vorzusehen, die durch ein Ventil zu der korrespondierenden Niederdampftemperatur entsprechend ansteuerbar sind.

In einer zweckmäßigen Ausgestaltung der fossilbefeuerten Kraftwerksanlage ist in der Desorptionseinheit das Endregenerierungssystem im unteren Bereich der Desorptionseinheit angeordnet.

In einer vorteilhaften Weiterbildung der fossilbefeuerten Kraftwerksanlage ist ein Vorwärmer sekundär ableitend mit dem Einlass der Desorptionseinheit und sekundär zuleitend mit dem Auslass der Absorptionseinheit verbunden. Im Betrieb ist so dadurch eine Vorwärmung für das beladene Absorptionsmedium bewirkt. Primär ableitend ist der Vorwärmer mit dem Einlass der Absorptionseinheit und primär zuleitend mit dem Auslass der Desorptionseinheit verbunden. Dies bewirkt eine Abkühlung für das regenerierte Absorptionsmedium. Dabei ist die primäre Seite die Energie abgebende Seite und die sekundäre Seite die Energie aufnehmende Seite. Die Funktionsweise des Vorwärmers entspricht dabei der eines Wärmetauschers. Durch die Verwendung eines Vorwärmers kann im System freiwerdende Wärmeenergie wieder dem System zugeführt werden.

Zweckmäßigerweise ist die fossilbefeuerte Kraftwerksanlage derart ausgestaltet, dass die Abscheidevorrichtung mit einem für die Aufnahme von Kohlendioxid geeigneten Absorptionsmedium, insbesondere einem Waschmittel für Kohlendioxid, betreibbar ist. Dafür sind zusätzlich entsprechende Tanks für reines und beladenes Absorptionsmedium, Rohrleitungen, Ventile und Mess-, Kontroll- und Steuerelemente vorgesehen.

Als Absorptionsmedium wird vorzugsweise ein Fluid verwendet. Gegenüber einem Feststoff bietet ein Fluid einen erheblichen Vorteil bei der Durchleitung. Flüssigkeiten, Gase, Aerosole oder Suspensionen sind dabei als Fluid geeignet. Als Flüssigkeit wird vorzugsweise die Verwendung eines verdampfbaren Lösungsmittels vorgeschlagen. Besonders vorteilhaft ist die Verwendung aus einer Lösung aus H₂O und Aminderivaten als Waschmittel. Bekannt sind beispielsweise Lösungen unter den Namen MEA (Mono-Ethanolamin) und MDEA (Methyldiethanolamin).

In einer bevorzugten Ausgestaltung ist die fossilbefeuerte Kraftwerksanlage eine Dampfkraftwerksanlage, welches einen befeuerten Kessel und eine Dampfturbine umfasst. In einer weiteren bevorzugten Ausgestaltung ist die fossilbefeuerte Kraftwerksanlage eine Gas- und Dampfturbinenkraftwerksanlage, welche eine Gasturbine und einen der Gasturbine abgasseitig nachgeschalteten Abhitzedampferzeuger umfasst, der in den Wasser-Dampf-Kreislauf einer Dampfturbine geschaltet ist. Die Implementierung der beschriebenen Abscheidevorrichtung in andere fossilbefeuerte Kraftwerke ist dann ebenso sinnvoll, wenn die Abscheidevorrichtung vorhandene oder abfallende Energie des Kraftwerks nutzen kann.

In einer Weiterbildung der fossilbefeuerten Kraftwerksanlage ist die Niedertemperaturdampfleitung eine Anzapfleitung der Dampfturbine oder eine Überströmleitung mit niedrigem Temperatur und Druckniveau. Die Anzapfung kann z.B. zwischen dem Hoch- und Niederdruckteil der Dampfturbine angeordnet sein. Analog zu dieser Weiterbildung ist die Heißdampfleitung eine Anzapfleitung der Dampfturbine oder eine Überströmleitung bei hohem Temperatur und Druckniveau. Die Anzapfung kann z.B. im Bereich des Hochdruckteils der Dampfturbine erfolgen.

Weitere Vorteile der fossilbefeuerten Kraftwerksanlage ergeben sich in analoger Weise aus den entsprechenden Weiterbildungen des voranbeschriebenen Kohlendioxid-Abtrennungsverfahrens.

Nachfolgend werden Ausführungsbeispiele der Erfindung anhand der beigefügten schematischen Zeichnungen näher erläutert. Es zeigt:
- FIG 1: ein Ausführungsbeispiel eines Kohlendioxid-Abtrennungsverfahrens einer fossilbefeuerten Kraftwerksanlage.
- FIG 2: ein Ausführungsbeispiel einer Dampfkraftwerksanlage als fossilbefeuerten Kraftwerksanlage mit Kohlendioxid-Abscheidevorrichtung.
- FIG 3: ein Ausführungsbeispiel einer Gas- und Dampfturbinenkraftwerksanlage als fossilbefeuerten Kraftwerksanlage mit einer Kohlendioxid-Abscheidevorrichtung.

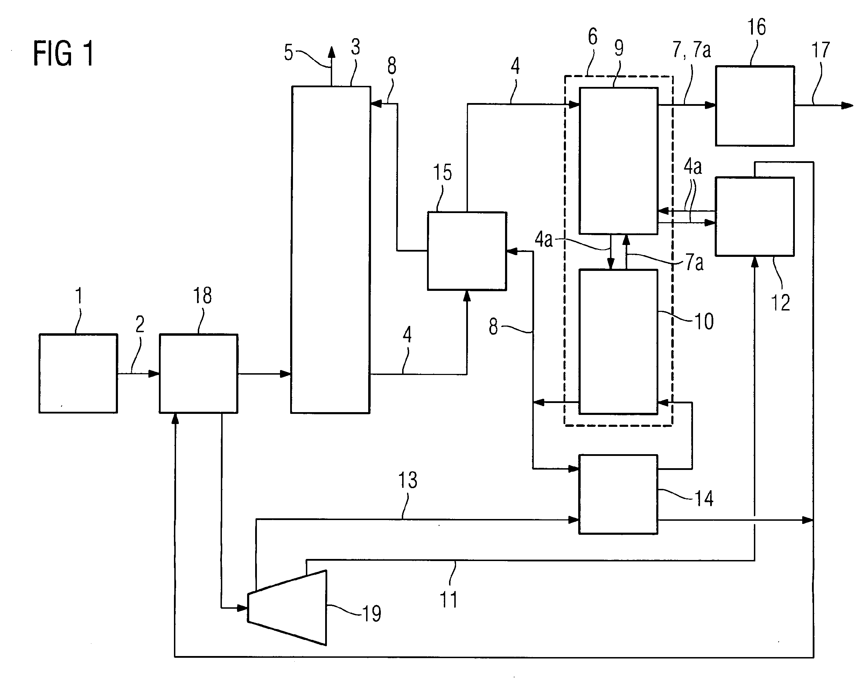

Das in FIG 1 dargestellte Kohlendioxid-Abtrennungsverfahren umfasst im Wesentlichen einen Verbrennungsprozess 1, einen Absorptionsprozess 3 und einen Desorptionsprozess 6.

Ein in dem Verbrennungsprozess 1 entstehendes kohlendioxidhaltiges Abgas 2 wird über einen Dampferzeugungsprozess 18 dem Absorptionsprozess 3 zugeführt. In dem Absorptionsprozess 3 wird Kohlendioxid aus dem kohlendioxidhaltigen Abgas 2 durch ein Absorptionsmedium aufgenommen. Den Absorptionsprozess 3 verlassen ein beladenes Absorptionsmedium 4 sowie ein gereinigtes Abgas 5.

Das beladene Absorptionsmedium 4 wird in einem dem Absorptionsprozess 3 nachgeschalteten Vorwärmprozess 15 erwärmt. Anschließend wird das beladene Absorptionsmedium 4 in den Desorptionsprozess 6 geführt, wo es zunächst in einem Vorregenerierungsschritt 9 teilregeneriert wird. Dabei wird ein teilregeneriertes Absorptionsmedium 4a und ein abgetrenntes Kohlendioxid 7 gebildet. Das teilregenerierte Absorptionsmedium wird anschließend in den Endregenerierungsschritt 10 des Desorptionsprozesses 6 geleitet, in dem es regeneriert wird. Dabei entstehen ein regeneriertes Absorptionsmedium 8 und ein abgetrenntes Kohlendioxid 7a. Das abgetrennte Kohlendioxid 7 aus dem Vorregenerierungsschritt 9 und das abgetrennte Kohlendioxid 7a aus dem Endregenerierungsschritt 10 wird nachfolgend einem Verdichtungsprozess 16 zugeführt. Das in dem Verdichtungsprozess 16 komprimierte Kohlendioxid 17 kann nun einer weiteren Verwendung oder Lagerung zugeführt werden.

Das den Endregenerierungsschritt 10 verlassende regenerierte Absorptionsmedium 8 wird einem Wärmetauscherprozess 14 und dem Vorwärmprozess 15 zugeführt. In dem Vorwärmprozess 15 wird Wärme von dem regenerierten Absorptionsmedium 8 entzogen und an das beladene Absorptionsmedium 4 abgegeben. Das den Vorwärmprozess 15 verlassende beladene Absorptionsmedium 8 wird in den Absorptionsprozess 3 geleitet, in dem es erneut zur Absorption von Kohlendioxid bereitgestellt wird.

Der Vorregenerierungsschritt 9 des Desorptionsprozesses 6 ist verbunden mit einem Wärmetauscherprozess 12, welcher von dem teilregenerierten Absorptionsmedium 4a durchströmt wird. Der Wärmetauscherprozess 12 ist darüber hinaus zuleitend mit einem Dampfentspannungsprozess 19 verbunden, durch den ein Niedertemperaturdampf 11 zugeführt wird. In dem Wärmetauscherprozess 12 wird Wärme von dem Niedertemperaturdampf 11 an das beladene Absorptionsmedium 4 abgegeben. Den Wärmetauscherprozess 12 verlässt ein Kondensat 50, welches in den Dampferzeugungsprozess 18 geführt wird.

Der Endregenerierungsschritt 10 des Desorptionsprozesses 6 ist verbunden mit einem Wärmetauscherprozess 14, welcher von regeneriertem Absorptionsmedium 8 durchströmt wird. Der Wärmetauscherprozess 14 ist außerdem zuleitend mit dem Dampfentspannungsprozess 19 verbunden, wobei ein Hochtemperaturdampf 13 zugeführt wird. In dem Wärmetauscherprozess 14 wird Wärme von dem Hochtemperaturdampf 13 an das regenerierte Absorptionsmedium 8 abgegeben. Den Wärmetauscherprozess 14 verlässt ein Kondensat 50, welches in den Dampferzeugungsprozess 18 geführt wird.

Der Dampferzeugungsprozess 18 ist zuleitend verbunden mit dem Verbrennungsprozess 1, aus dem ein heißes, kohlendioxidhaltiges Abgas 2 zugeführt wird. Der in dem Dampferzeugungsprozess 18 erzeugte Dampf wird dem Dampfentspannungsprozess 19 zugeführt.

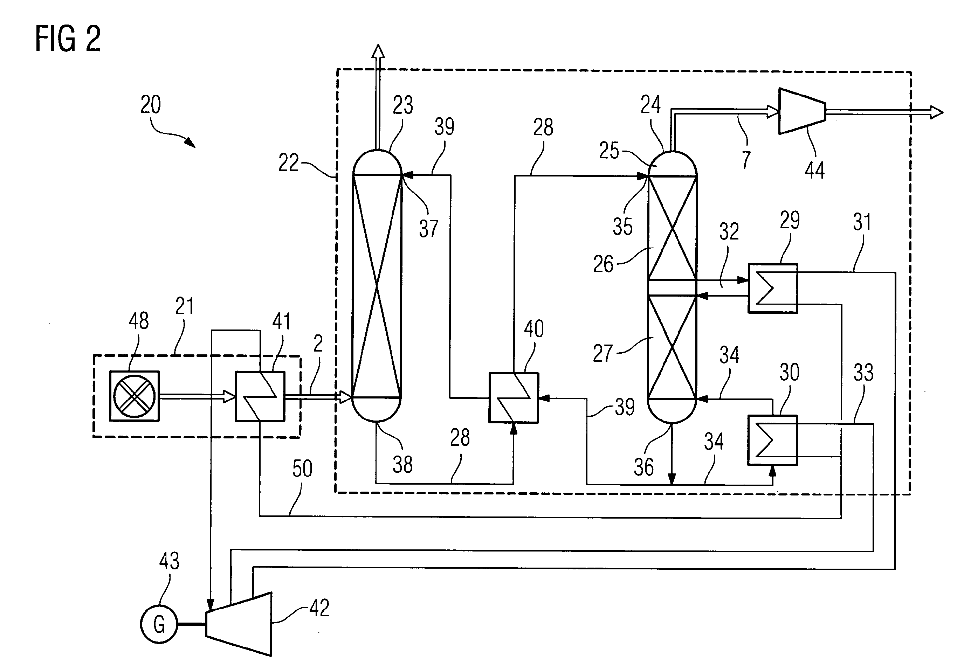

Die in FIG 2 dargestellte fossilbefeuerte Kraftwerksanlage 20 zeigt eine Dampfkraftwerksanlage mit Abscheidevorrichtung für Kohlendioxid 22. Diese umfasst im Wesentlichen eine Verbrennungsvorrichtung 21 und eine der Verbrennungsvorrichtung 21 nachgeschalteten Abscheidevorrichtung 22 für Kohlendioxid.

Die gezeigte Verbrennungsvorrichtung 21 besteht aus einer Brennkammer 48 und einem befeuerten Kessel 41. Die Verbrennungsvorrichtung 21 ist abgasleitend mit der Abscheidevorrichtung 22 verbunden. Der befeuerte Kessel 41 ist mit einer Dampfturbine 42 verbunden, durch welche einen Generator 43 antreibbar ist.

Die Abscheidevorrichtung 22 besteht aus einer Absorptionseinheit 23, einem Vorwärmer 40, einer Desorptionseinheit 24, einer Niedertemperatur-Heizvorrichtung 29, einer Hochtemperatur-Heizvorrichtung 30 und einem Verdichter 44. Der Auslass 38 der Absorptionseinheit 23 ist primär zuleitend für ein Absorptionsmedium mit dem Vorwärmer 40 verbunden. Primär ableitend ist der Vorwärmer 40 mit dem Einlass 35 der Desorptionseinheit 24 verbunden. Die Desorptionseinheit 24 umfasst einen Regenerator 25, der aus einem Vorregenerierungssystem 26 und einem Endregenerierungssystem 27 besteht. Das Vorregenerierungssystem 26 und das Endregenerierungssystem 27 sind miteinander Gas- und Fluidleitend miteinander verbunden. Das Vorregenerierungssystem 26 ist über einen Niedertemperatur-Heizkreislauf 32 zuleitend mit einer Niedertemperatur-Heizvorrichtung 29 verbunden. Die Niedertemperatur-Heizvorrichtung 29 ist wiederum ableitend mit dem Vorregenerierungssystem 26 verbunden. Im Betrieb ist somit ein Kreislauf bewirkt.

Der Auslass 36 der Desorptionseinheit 24 ist verbunden mit einen Hochtemperatur-Heizkreislauf 34 und mit dem Vorwärmer 40. Der Auslass 36 ist mit der Hochtemperatur-Heizvorrichtung 30 zuleitend verbunden. Die Hochtemperatur-Heizvorrichtung 30 ist ableitend mit dem Endregenerierungssystem 27 verbunden. Der Auslass 36 ist mit dem Vorwärmer 40 sekundär zuleitend verbunden. Sekundär ableitend ist der Vorwärmer 40 mit dem Einlass 37 der Absorptionseinheit 23 verbunden.

Die Niedertemperatur-Heizvorrichtung 29 ist über eine Niedertemperaturdampfleitung 31 zu- und ableitend mit dem Niederdruckteil der Dampfturbine 42 verbunden. Die Hochtemperatur-Heizvorrichtung 30 ist über eine Hochtemperaturdampfleitung 33 mit dem Hochdruckteil der Dampfturbine 42 verbunden.

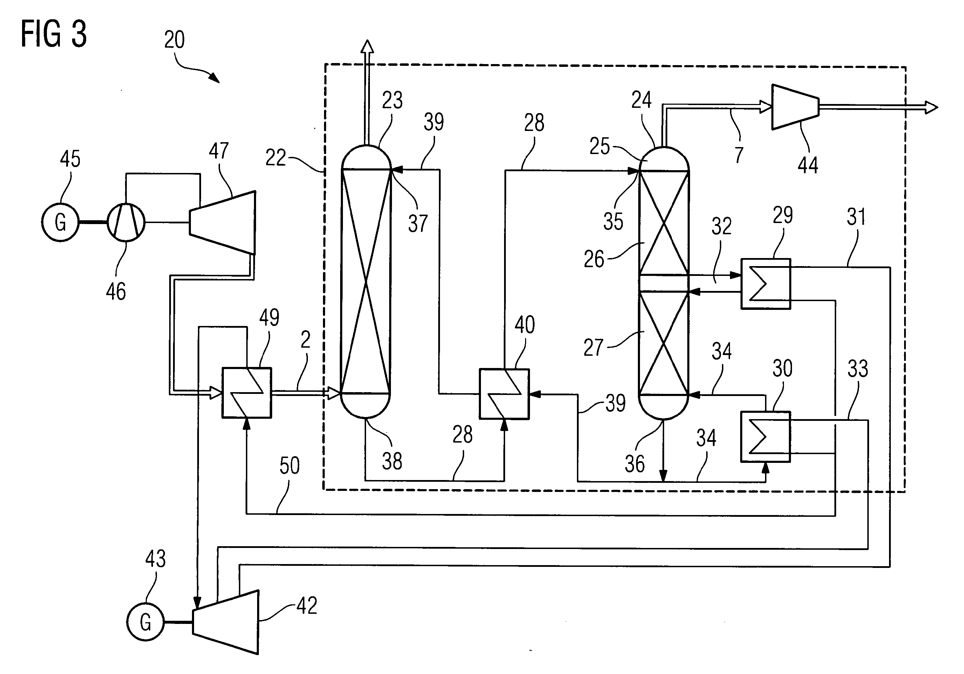

Die in FIG 3 dargestellte fossilbefeuerte Kraftwerksanlage 20 zeigt eine Gas- und Dampfturbinenkraftwerksanlage mit Abscheidevorrichtung 22 für Kohlendioxid. Der Abscheidevorrichtung 22 vorgeschaltet sind eine Gasturbine 47, welche über eine Welle mit Luftverdichter 46 und einem Generator 45 verbunden ist, ein Abhitzedampferzeuger 49, der durch die Gasturbine 47 befeuert ist und für die Dampferzeugung bereitgestellt ist, sowie eine Dampfturbine 42, die über eine Welle mit einem Generator 43 verbunden ist und die mit einer Dampfleitung mit dem befeuerten Kessel 41 verbunden ist. Die nachgeschaltete Abscheidevorrichtung 22 ist im Wesentlichen analog ausgestaltet wie in Fig. 2 bei dem Dampfkraftwerk.

Mit der Erfindung ist der Betrieb eines im Kohlendioxidausstoß reduzierten Kraftwerks mit hoher Effizienz möglich. Dabei wird das Absorptionsmedium zur Abtrennung von Kohlendioxid aus einem Abgas in mehreren Stufen von Kohlendioxid regeneriert, wobei den Regenerierungsstufe Energie auf unterschiedlichen Temperaturniveaus zugeführt werden. Dabei wird der Sumpfverdampfer entlastet und höherwertiger Dampf mit dem Preis der Zugabe von niederwertigem Dampf eingespart. Die Vorrichtung zum Abtrennen von Kohlendioxid aus einem kohlendioxidhaltigen Abgas ist Bestandteil der fossilbefeuerten Kraftwerksanlage. Durch die schaltungstechnische Verbesserung ist eine wesentliche Effizienzsteigerung gegenüber einer herkömmlichen Gasreinigungseinrichtung einer fossilbefeuerten Kraftwerksanlage erzielbar.

## Patentansprüche

1. Verfahren zum Abtrennen von Kohlendioxid aus einem Abgas einer fossilbefeuerten Kraftwerksanlage, bei dem
a) in einem Verbrennungsprozess (1) ein fossiler Brennstoff verbrannt wird, wobei ein kohlendioxidhaltiges Abgas (2) erzeugt wird,
b) in einem Absorptionsprozess (3) kohlendioxidhaltiges Abgas (2) mit einem Absorptionsmedium in Kontakt gebracht wird, wobei Kohlendioxid von dem Absorptionsmedium aufgenommen wird, wobei ein beladenes Absorptionsmedium (4) und ein gereinigtes Abgas (5) gebildet wird, das von Kohlendioxid befreit ist,
c) in einem Desorptionsprozess (6) von dem beladenen Absorptionsmedium (4) gasförmiges Kohlendioxid (7) abgegeben wird, wobei regeneriertes Absorptionsmedium (8) gebildet wird,
d) wobei in dem Desorptionsprozess (6) das beladene Absorptionsmedium (4) zunächst in mindestens einem Vorregenerierungsschritt (9) teilregeneriert wird, und in einem dem Vorregenerierungsschritt (9) nachfolgenden Endregenerierungsschritt (10) das beladene Absorptionsmedium (4) regeneriert wird.

2. Verfahren nach Anspruch 1, bei dem in dem Vorregenerierungsschritt (9) das beladene Absorptionsmedium (4) in mehreren Vorregenerierungsschritten teilregeneriert wird.

3. Verfahren nach Anspruch 1 oder 2, bei dem in dem Desorptionsprozess (6) von dem beladenen Absorptionsmedium (4) gasförmiges Kohlendioxid (7) thermisch ausgetrieben wird, wobei ein Gas- Dampfgemisch aus gasförmigem Kohlendioxid und verdampften Absorptionsmedium gebildet wird.

4. Verfahren nach Anspruch 1 oder 2, bei dem der Vorregenerierungsschritt (9) zur Teilregenerierung des beladenen Absorptionsmediums (4) bei einer Vorreinigungstemperatur durchgeführt wird, und bei dem der Endregenerierungsschritt (10) zur Regenerierung des beladenen Absorptionsmediums (4) bei einer Endreinigungstemperatur durchgeführt wird, wobei die Vorreinigungstemperatur niedriger eingestellt wird als die Endreinigungstemperatur.

5. Verfahren nach einem der Ansprüche 2 bis 4, bei dem in dem Vorregenerierungsschritt (9) die Wärme für die Vorreinigungstemperatur durch Niedertemperaturdampf (11) bereitgestellt wird, wobei dieser in einem Wärmetauscherprozess (12) mit dem beladenen Absorptionsmedium (4) im Wärmetausch geführt wird.

6. Verfahren nach Anspruch 5, wobei ein Niedertemperaturdampf (11) mit einer Temperatur zwischen 60°C und 120°C verwendet wird.

7. Verfahren nach einem der Ansprüche 2 bis 4, bei dem in dem Endregenerierungsschritt (10) die Wärme für die Endreinigungstemperatur durch Heißdampf (13) bereitgestellt wird, wobei dieser in einem Wärmetauscherprozess (14) mit dem beladenen Absorptionsmedium (4) im Wärmetausch geführt wird, wobei der Heißdampf (13) auf eine höhere Temperatur eingestellt wird, als die Temperatur des Niedertemperaturdampfs (11).

8. Verfahren nach Anspruch 7, wobei ein höherwertiger Heißdampf (13) mit einer Temperatur von mindestens 120°C verwendet wird.

9. Verfahren nach Anspruch 1 bis 8, wobei ein Fluid als Absorptionsmedium verwendet wird.

10. Verfahren nach Anspruch 9, wobei eine Flüssigkeit, ein Gas, ein Aerosol oder eine Suspension als Fluid verwendet wird.

11. Verfahren nach Anspruch 10, wobei ein verdampfbares Lösungsmittel als Flüssigkeit verwendet wird.

12. Verfahren nach Anspruch 11, wobei eine Lösung aus H₂O und Aminderivaten als Lösungsmittel verwendet wird.

13. Verfahren nach einem der Ansprüche 1 bis 9, bei dem in einem Vorwärmprozess (15) Wärme von dem regenerierten Absorptionsmedium (8) entzogen wird, und an das beladenes Absorptionsmedium (4) abgegeben wird.

14. Verfahren nach einem der Ansprüche 1 bis 13, bei dem das aus dem Abgas (2) abgetrennte Kohlendioxid (7) in einem Komprimierungsprozess (16) komprimiert wird, wobei ein komprimiertes Kohlendioxid (17) entsteht.

15. Verfahren nach Anspruch 14, bei dem das komprimierte Kohlendioxid (17) gespeichert wird.

16. Verfahren nach einem der vorhergehenden Ansprüche, **gekennzeichnet durch** eine Anwendung bei einem fossilbefeuerten Dampfkraftwerk.

17. Verfahren nach einem der Ansprüche 1 bis 15, **gekennzeichnet durch** eine Anwendung bei einer kombinierten Gas- und Dampfturbinen-Kraftwerksanlage.

18. Fossilbefeuerte Kraftwerksanlage (20) mit einer einer Verbrennungsvorrichtung (21) nachgeschalteten und von einem kohlendioxidhaltigen Abgas (2) durchströmbaren Abscheidevorrichtung (22) für Kohlendioxid, wobei die Abscheidevorrichtung (22) eine Absorptionseinheit (23) zur Aufnahme von Kohlendioxid aus dem kohlendioxidhaltigen Abgas (2) und eine Desorptionseinheit (24) zur Abgabe des aufgenommenen Kohlendioxids aufweist, und wobei zur Abgabe des Kohlendioxids die Desorptionseinheit (24) einen Regenerator (25) umfasst, **dadurch gekennzeichnet, dass** der Regenerator (25) ein Vorregenerierungssystem (26) und ein Endregenerierungssystem (27) aufweist, so dass im Betrieb eine gestufte Abgabe von Kohlendioxid bewirkt ist.

19. Fossilbefeuerte Kraftwerksanlage (20) nach Anspruch 18, **dadurch gekennzeichnet, dass** durch den Regenerator (25) Kohlendioxid aus einem beladenen Absorptionsmedium (28) thermisch austreibbar ist.

20. Fossilbefeuerte Kraftwerksanlage (20) nach Anspruch 18 oder 19, **dadurch gekennzeichnet, dass** diese derart ausgestaltet ist, dass im Betrieb der Abscheidevorrichtung (22) bei dem Vorregenerierungssystem (26) für eine Teilregenerierung des beladenen Absorptionsmediums (28) eine Vorreinigungstemperatur einstellbar ist, und bei dem Endregenerierungssystem (27) für eine Regenerierung des beladenen Absorptionsmediums (28) eine Endreinigungstemperatur einstellbar ist, so dass die Vorreinigungstemperatur niedriger ist als die Endreinigungstemperatur.

21. Fossilbefeuerte Kraftwerksanlage (20) nach einem der Ansprüche 18 bis 20, **dadurch gekennzeichnet, dass** das Vorregenerierungssystem (26) mehrere Vorreinigungseinheiten aufweist, so dass eine Vorreinigung in mehreren Vorregenerierungsschritten durchführbar ist.

22. Fossilbefeuerte Kraftwerksanlage (20) nach einem der Ansprüche 18 bis 21, **dadurch gekennzeichnet, dass** das Vorregenerierungssystem (26) wenigstens eine Niedertemperatur-Heizvorrichtung (29) aufweist.

23. Fossilbefeuerte Kraftwerksanlage (20) nach einem der Ansprüche 18 bis 22, **dadurch gekennzeichnet, dass** das Endregenerierungssystem (27) eine Hochtemperatur-Heizvorrichtung (30) aufweist.

24. Fossilbefeuerte Kraftwerksanlage (20) nach Anspruch 22 oder 23, **dadurch gekennzeichnet, dass** in dem Vorregenerierungssystem (26) die Niedertemperatur-Heizvorrichtung (29) als Wärmeübertrager ausgestaltet ist, der primärseitig mit einer Niedertemperaturdampfleitung (31) verbunden ist und dessen Sekundärseite einen Niedertemperatur-Heizkreislauf (32) bildet, so dass im Betrieb Kohlendioxid aus dem beladenen Absorptionsmedium (28) thermisch austreibbar ist.

25. Fossilbefeuerte Kraftwerksanlage (20) nach Anspruch 23 oder 24, **dadurch gekennzeichnet, dass** in dem Endregenerierungssystem (27) die Hochtemperatur-Heizvorrichtung (30) als Wärmeübertrager ausgestaltet ist, der primärseitig mit einer Heißdampfleitung (33) verbunden ist und dessen Sekundärseite einen Hochtemperatur-Heizkreislauf (34) bildet, so dass im Betrieb Kohlendioxid aus einem Absorptionsmedium thermisch austreibbar ist.

26. Fossilbefeuerte Kraftwerksanlage (20) nach Anspruch 24 oder 25, **dadurch kennzeichnet, dass** der Wärmeeintrag in den Wärmeübertrager einstellbar ist, wobei der Durchfluss mit Dampf und oder die Temperatur einstellbar ist.

27. Fossilbefeuerte Kraftwerksanlage (20) nach einem der Ansprüche 24 bis 26, **dadurch gekennzeichnet, dass** diese derart ausgestaltet ist, dass im Betrieb der Kraftwerksanlage durch die Niedertemperaturdampfleitung (31) ein Niedertemperaturdampf bereitgestellt ist, und dass durch die Heißdampfleitung (33) ein Heißdampf bereitgestellt ist, und dass der Niedertemperaturdampf eine geringere Temperatur aufweist als der Heißdampf.

28. Fossilbefeuerte Kraftwerksanlage (20) nach einem der Ansprüche 18 bis 27, **dadurch gekennzeichnet, dass** die Desorptionseinheit (24) als eine entlang einer vertikalen Achse ausgerichteten Säule ausgestaltet ist, wobei die Säule im oberen Bereich einen Einlass (35) und im unteren Bereich einen Auslass (36) aufweist, so dass im Betrieb beladenes Absorptionsmedium (28) im oberen Bereich einführbar und im unteren Bereich ein regeneriertes Absorptionsmedium (39) ausleitbar ist, so dass eine Durchströmung der Desorptionseinheit (24) mit beladenen Absorptionsmediums (28) bewirkt ist.

29. Fossilbefeuerte Kraftwerksanlage (20) nach Anspruch 28, **dadurch gekennzeichnet, dass** in der Desorptionseinheit (24) die Niedertememperatur-Heizvorrichtung (29) des Vorregenerierungssystems (26) entlang der vertikalen Achse derart an einer vertikalen Position positioniert ist, dass eine erforderliche Vorreinigungstemperatur lokal bereitstellbar ist.

30. Fossilbefeuerte Kraftwerksanlage (20) nach einem der Ansprüche 28 bis 29, **dadurch gekennzeichnet, dass** in der Desorptionseinheit (24) das Endregenerierungssystem (27) im unteren Bereich der Desorptionseinheit (24) angeordnet ist.

31. Fossilbefeuerte Kraftwerksanlage (20) nach einem der Ansprüche 18 bis 30, **dadurch gekennzeichnet, dass** die Absorptionseinheit (23) als eine entlang einer vertikalen Achse ausgerichteten Säule ausgestaltet ist, wobei die Säule im oberen Bereich einen Einlass (37) und im unteren Bereich einen Auslass (38)aufweist, so dass im Betrieb regeneriertes Absorptionsmedium (39) im oberen Bereich einführbar ist, und beladenes Absorptionsmedium (28) im unteren Bereich ausleitbar ist, und dass durch die Absorptionseinheit (23) kohlendioxidhaltiges Abgas (2) leitbar ist, so dass eine Durchströmung nach dem Gegenstromprinzip von kohlendioxidhaltigem Abgas und Absorptionsmedium bewirkt ist.

32. Fossilbefeuerte Kraftwerksanlage (20) nach Anspruch 31, **dadurch gekennzeichnet, dass** ein Vorwärmer (40) sekundär ableitend mit dem Einlass (35) der Desorptionseinheit (24) und sekundär zuleitend mit dem Auslass (39) der Absorptionseinheit (23) verbunden ist, so dass im Betrieb eine Vorwärmung für das beladene Absorptionsmedium (28) bewirkt ist, und dass der Vorwärmer (40) primär ableitend mit dem Einlass (37) der Absorptionseinheit (23) und primär zuleitend mit dem Auslass (36) der Desorptionseinheit (24) verbunden ist, so dass eine Abkühlung für das regenerierte Absorptionsmedium (39) bewirkt ist.

33. Fossilbefeuerte Kraftwerksanlage (20) nach einem der Ansprüche 18 bis 32, **dadurch gekennzeichnet, dass** die Abscheidevorrichtung (22) derart ausgestaltet ist, dass diese mit einem für die Aufnahme von Kohlendioxid geeigneten Absorptionsmedium, insbesondere einem Waschmittel für Kohlendioxid, betreibbar ist.

34. Fossilbefeuerte Kraftwerksanlage (20) nach Anspruch 33, **dadurch gekennzeichnet, dass** die Abscheidevorrichtung (22) für den Betrieb mit einer Lösung aus H₂O und Aminderivaten als Absorptionsmedium ausgestaltet ist.

35. Fossilbefeuerte Kraftwerksanlage (20) nach einem der Ansprüche 18 bis 34, **gekennzeichnet durch** eine Ausgestaltung als Dampfkraftwerk, umfassend einen befeuerten Kessel (41) und eine Dampfturbine (42).

36. Fossilbefeuerte Kraftwerksanlage (20) nach einem der Ansprüche 18 bis 35, **gekennzeichnet durch** eine Ausgestaltung als Gas- und Dampfturbinenanlage, umfassend eine Gasturbine (43) und einen der Gasturbine (43) abgasseitig nachgeschalteten Abhitzedampferzeuger (49), der in den Wasser-Dampf-Kreislauf einer Dampfturbine (45) geschaltet ist.

37. Fossilbefeuerte Kraftwerksanlage (20) nach einem der Ansprüche 24 bis 36, **dadurch gekennzeichnet, dass** die Niedertemperaturdampfleitung (31) eine Anzapfleitung der Dampfturbine (42, 45) bei niedrigem Temperatur und Druckniveau ist.

38. Fossilbefeuerte Kraftwerksanlage (20) nach einem der Ansprüche 25 bis 37, **dadurch gekennzeichnet, dass** die Heißdampfleitung (33) eine Anzapfleitung der Dampfturbine (42, 45) bei hohem Temperatur und Druckniveau ist.
